**Europäisches Patentamt**

**European Patent Office**

**Office européen des brevets**

(11) Numéro de publication : **0 465 315 A1**

# (12) DEMANDE DE BREVET EUROPEEN

(21) Numéro de dépôt : **91401757.9**

(22) Date de dépôt : **27.06.91**

(51) Int. Cl.⁵ : **H04B 1/50**

(30) Priorité : **04.07.90 FR 9008475**

(43) Date de publication de la demande :
**08.01.92 Bulletin 92/02**

(84) Etats contractants désignés :
**DE ES GB IT**

(71) Demandeur : **MATRA COMMUNICATION**
**50, rue du Président Sadate, BP 32 - Creac'h Gwenn**
**F-29101 Quimper Cédex (FR)**

(72) Inventeur : **Jolivet, André**
**10 Ter rue Madame**
**F-78000 Versailles (FR)**

(74) Mandataire : **Fruchard, Guy et al**
**CABINET BOETTCHER 23, rue la Boétie**
**F-75008 Paris (FR)**

(54) **Dispositif de couplage d'une antenne à des organes de radio-communication.**

(57) Le dispositif de couplage est destiné à relier une antenne (3) à un premier organe de radio communication (1) fonctionnant à une première fréquence, ou un second organe de radio communication (2) fonctionnant à une seconde fréquence qui est sensiblement double de la première fréquence, et comporte une première branche (4) ayant un premier segment de ligne de transmission (6) de longueur égale au quart de la longueur d'onde de transmission de la seconde fréquence et un second segment de ligne de transmission (7) monté en dérivation et ayant une longueur égale à la moitié de la longueur d'onde de transmission de la seconde fréquence, et une seconde branche (5) montée en parallèle à la première branche et comportant un troisième segment de ligne de transmission (10) ayant une longueur égale au quart de la longueur d'onde de transmission de la première fréquence et un quatrième segment de ligne de transmission (11) monté en dérivation et ayant une longueur égale au quart de la longueur d'onde de transmission de la première fréquence.

EP 0 465 315 A1

La présente invention concerne un dispositif de couplage d'une antenne à plusieurs organes de radio-communication destinés à être utilisés plus particulièrement, bien que non exclusivement, dans un réseau de radio-téléphonie.

On sait qu'en raison de l'augmentation constante du nombre d'utilisateurs de radio-téléphones, les bandes de fréquences initialement prévues à cet usage se trouvent saturées et il est donc nécessaire de prévoir de nouvelles bandes de fréquences pour la communication radio. Pour une bonne gestion du réseau, il est souhaitable que les stations mobiles puissent indifféremment communiquer avec des stations fixes à l'une ou l'autre des fréquences de communication. A cet effet une station mobile comporte donc un premier organe de radio communication et un second organe de radio communication qui sont de préférence couplés à une même antenne. Les dispositifs de couplage comportent habituellement des moyens de détection de la fréquence d'utilisation et des moyens de commutation pour assurer de façon sélective une liaison de l'antenne avec l'un des organes de radio communication. Un tel dispositif de couplage est onéreux et donc incompatible avec le développement d'organes de communication de très faible coût global permettant une très grande diffusion.

L'invention concerne un dispositif de couplage particulièrement économique et utilisable lorsque le premier organe de radio communication fonctionne à une première fréquence et le second organe de radio communication fonctionne à une seconde fréquence qui est sensiblement double de la première fréquence.

Selon l'invention on prévoit un dispositif de couplage à une antenne comportant deux branches reliées en parallèle à l'antenne, la première branche étant raccordée au premier organe de radio communication et une seconde branche étant raccordée au second organe de radio communication, dans lequel la première branche comporte un premier segment de lignes de transmission ayant une longueur égale au quart de la longueur d'onde de transmission de la seconde fréquence dans ce segment et un second segment de ligne de transmission ayant une extrémité reliée à la masse et une extrémité opposée reliée à la première branche entre le premier segment de ligne de transmission et le premier organe de radio communication , ce second segment ayant une longueur égale à la moitié de la longueur d'onde de transmission de la seconde fréquence dans ce segment, et la seconde branche comporte un troisième segment de ligne de transmission ayant une longueur égale au quart de la longueur d'onde de transmission de la première fréquence dans ce segment, et un quatrième segment de ligne de transmission ayant une extrémité non raccordée et une extrémité opposée reliée à la seconde branche entre le troisième segment de ligne de transmission et le second organe de radio communication, ce quatrième segment de ligne de transmission ayant une longueur égale au quart de la longueur d'onde de transmission de la première fréquence dans ce segment.

Selon une version avantageuse de l'invention, le dispositif de couplage comporte une première capacité montée en série entre le second segment de ligne de transmission et la masse, et une seconde capacité montée en parallèle au second élément de ligne de transmission.

Selon une autre version avantageuse de l'invention, le dispositif de couplage comporte une troisième capacité montée en série entre le quatrième segment de ligne de transmission et la seconde branche, et une impédance inductive montée en parallèle au quatrième segment de ligne de transmission et reliée à la masse. De préférence, il comporte un condensateur d'adaptation en série avec l'impédance inductive.

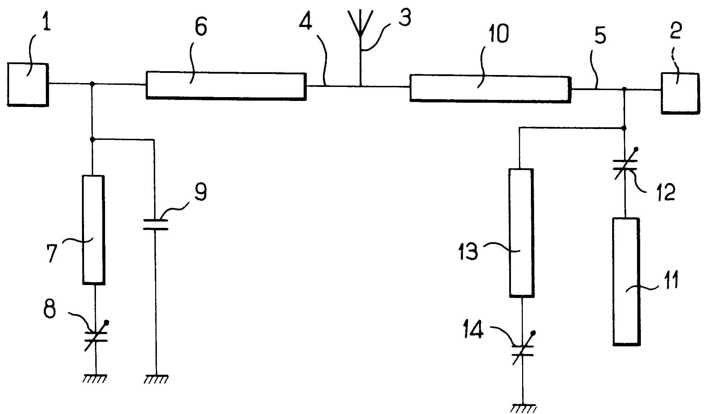

D'autres caractéristiques et avantages de l'invention apparaîtront à la lecture de la description qui suit d'un mode de réalisation particulier non limitatif de l'invention en liaison avec la figure unique ci-jointe qui est un diagramme schématique du dispositif selon l'invention.

En référence au dessin, le dispositif de couplage selon l'invention est destiné à associer de façon sélective un premier organe de radio communication 1 fonctionnant à une première fréquence et un second organe de radio communication 2 fonctionnant à une seconde fréquence qui est sensiblement double de la première fréquence, à une antenne 3, généralement une antenne émettrice réceptrice.

Le dispositif de couplage comporte une première branche 4 et une seconde branche 5 reliées en parallèle à l'antenne 3. La première branche 4 est raccordée au premier organe de radio communication 1 et la seconde branche est raccordée au second organe de radio communication 2.

La première branche 4 comporte un premier segment de ligne de transmission 6 ayant une longueur égale au quart de la longueur d'onde de transmission de la seconde fréquence dans ce segment. On entend par segment de ligne de transmission un segment de ligne conductrice fixé sur un substrat et on rappelle à ce propos qu'un signal électrique modulé est transmis par un tel segment avec une longueur d'onde qui dépend de la nature du substrat. En principe, l'influence du substrat sur la longueur d'onde est la même quelle que soit la fréquence du signal envoyé dans le segment de ligne de transmission de sorte que la longueur d'onde est divisée par deux lorsque la fréquence est doublée, c'est le cas lorsque le substrat est de l'alumine. Toutefois, l'alumine est un matériau onéreux et l'on utilise plus généralement des substrats en résine époxy dont l'influence varie en fonction des fréquences, de sorte que la longueur d'onde à une fréquence double n'est pas tout à fait la moitié de la longueur d'onde à la fréquence simple. Il sera tenu compte de cette différence d'influence en utilisant des organes d'adaptation comme il sera décrit ci-après.

Un second segment de ligne de transmission 7 ayant une longueur égale à la moitié de la longueur d'onde de transmission de la seconde fréquence dans ce segment a une extrémité reliée à la masse par l'intermédiaire d'un condensateur variable 8 et une extrémité opposée reliée à la première branche entre le premier segment de ligne de transmission 6 et le premier organe de radio communication 1. Un condensateur d'adaptation 9 est monté en parallèle au second segment de ligne de transmission 7.

La seconde branche comporte un troisième segment de ligne de transmission 10 ayant une longueur égale au quart de la longueur d'onde de transmission de la première fréquence dans ce segment. Un quatrième segment de ligne de transmission 11 ayant une longueur égale au quart de la longueur d'onde de transmission de la première fréquence dans ce segment a une extrémité non raccordée et une extrémité opposée reliée à la seconde branche 5 par l'intermédiaire d'un condensateur variable 12. Une impédance inductive 13 en série avec un condensateur variable 14 relié à la masse est montée en dérivation par rapport au quatrième segment de ligne de transmission 11 et au condensateur variable 12.

Lorsque le substrat utilisé a des caractéristiques électromagnétiques constantes, les condensateurs variables 8 et 12 sont supprimé: ainsi que les organes montés en dérivation sur des segments de ligne de transmission 7 et 11. Le fonctionnement du dispositif de couplage selon l'invention est alors le suivant : lorsqu'un signal à la première fréquence est transmis à une borne d'entrée du dispositif de couplage, c'est-à-dire à partir de l'antenne 3 lors d'une réception et à partir de l'organe de radio communication 1 lors d'une émission, le premier segment de ligne de transmission 6 qui a une longueur correspondant au huitième de la longueur d'onde de transmission de la première fréquence dans ce segment apparaît comme un impédance ordinaire est traversée par le signal. Au contraire, le second segment de ligne de transmission 7, qui a une longueur correspondant au quart de la longueur d'onde de transmission de la première fréquence dans ce segment, apparaît avec une impédance inverse de l'impédance réelle, c'est-à-dire que ce segment apparaît comme un circuit ouvert et le signal à la première fréquence ne se transmet donc pas dans ce segment. Par ailleurs, le quatrième segment de ligne de transmission 11 qui est physiquement un circuit ouvert mais qui a une longueur égale au quart de la longueur d'onde de transmission de la première fréquence dans ce segment, apparaît également avec une impédance inverse, c'est-à-dire qu'il apparaît comme un court-circuit. Le troisième segment de ligne de transmission 10 de la seconde branche 5 apparaît donc relié à un court-circuit mais ce segment a une longueur égale au quart de la longueur d'onde de transmission de la première fréquence dans ce segment et se comporte donc lui-même comme un impédance inverse. A la première fréquence, la seconde branche 5 apparaît donc comme un circuit ouvert qui ne transmet donc pas le signal. A la première fréquence on constate donc que la liaison est assurée uniquement entre l'antenne 3 et le premier organe de radio communication 1 aussi bien dans le sens de l'émission que dans le sens de la réception.

A la seconde fréquence,double de la première fréquence, le second segment de ligne de transmission 7 qui a une longueur égale à la moitié de la longueur d'onde de transmission de la seconde fréquence dans ce segment apparaît avec son impédance réelle de court-circuit. Au contraire, le premier segment de ligne de transmission 6,qui a une longueur égale au quart de la longueur d'onde de transmission de la seconde fréquence dans ce segment, apparaît avec une impédance inverse de l'impédance réelle, c'est-à-dire qu'il apparaît comme un circuit ouvert et le signal à la seconde fréquence n'est donc pas transmis par la première branche 4. Par ailleurs, le quatrième segment de ligne de transmission 11 qui a une longueur correspondant à la moitié de la longueur d'onde de transmission de la seconde fréquence dans ce segment apparaît à cette fréquence avec son impédance réelle, c'est-à-dire qu'il apparaît comme un circuit couvert, tandis que le troisième segment de ligne de transmission 10 qui a également une longueur correspondant à la moitié de la longueur d'onde de transmission de la seconde fréquence dans ce segment apparaît lui aussi avec son impédance réelle et assure donc une liaison entre l'antenne 3 et le second organe de radio communication 2.

En pratique, le premier segment de ligne de transmission 6 et le troisième segment de ligne de transmission 10 doivent avoir une impédance adaptée à l'impédance des organes de radio communication respectifs. Un calcul permet de déterminer la largeur de la bande métallique fixée au substrat qui donne l'impédance convenable.

Pour chaque segment de ligne de transmission on calcule ou on mesure ensuite la longueur d'onde de transmission de la fréquence qui est déterminante pour ce segment de ligne de transmission, c'est-à-dire la seconde fréquence pour les premier et second segments de ligne de transmission et la première fréquence pour les troisième et quatrième segments de ligne de transmission , et l'on en déduit la longueur physique de chaque segment. En pratique lorsqu'on utilise une résine époxy, l'influence de cette résine sur la longueur d'onde de transmission dans un segment de ligne de transmission varie d'un lot de fabrication à un autre. C'est la raison pour laquelle on a prévu des organes d'adaptation telles que les condensateurs 8, 9, 12 et 14 et la charge inductive 13. Après réalisation du montage, le dispositif de couplage est réglé en envoyant successivement des signaux à la première fréquence et des signaux à la seconde fréquence. Lors de l'envoi de signaux à la seconde fréquence, le condensateur 8 est réglé pour que cette partie du circuit corresponde effectivement à un court-circuit, et lors de l'envoi de signaux à la première fréquence le condensateur 12 est réglé pour que le segment de ligne de transmission 11 apparaisse effectivement comme un court-circuit. A l'inverse, lors d'une utilisation à la première fréquence, le segment de ligne de transmission 7 et le condensateur 8 qui lui est associé n'apparaissent pas tout à fait comme un circuit ouvert mais comme une impédance inductive On détermine alors la valeur du condensateur 9 qu'il est nécessaire de monter en parallèle pour avoir un circuit effectivement ouvert. De même, du côté de la seconde branche, à la seconde fréquence, le segment de ligne de transmission et le condensateur 12 ne se comportent pas tout à fait comme un circuit ouvert mais présentent une impédance globale capacitive . On met donc une impédance inductive 13 en parallèle, et l'on utilise le condensateur variable 14 pour régler les effets de cette impédance inductive.

Bien entendu l'invention n'est pas limitée au mode de réalisation décrit et on peut y apporter des variantes de réalisation sans sortir du cadre de l'invention. En particulier, dans le cas d'un substrat présentant des caractéristiques constantes tant en fonction des fréquences que d'un lot de fabrication à l'autre, les organes d'adaptation pourront être supprimés ou modifiés en fonction des circonstances.

On notera que le dispositif de couplage selon l'invention fonctionne de façon satisfaisante non seulement lorsque la seconde fréquence est exactement le double de la première fréquence, mais également lorsque la seconde fréquence se situe dans une plage de l'ordre de quinze pour cent au-dessus ou en dessous du double de la première fréquence.

**Revendications**

1. Dispositif de couplage à une antenne (3) d'un premier organe de radio communication (1) fonctionnant à une première fréquence d'un second organe de radio communication (2) fonctionnant à une seconde fréquence qui est sensiblement double de la première fréquence, ce dispositif comportant deux branches reliées en parallèle à l'antenne (3), une première branche (4) étant raccordée au premier organe de radio communication (1) et une seconde branche (5) étant raccordée au second organe de radio communication (2), caractérisé en ce que la première branche (4) comporte un premier segment de ligne de transmission (6) ayant une longueur d'onde égale au quart de la longueur d'onde de transmission de la seconde fréquence dans ce segment, et un second segment de ligne de transmission (7) ayant une extrémité reliée à la masse et une extrémité opposée reliée à la première branche (4) entre le premier segment de ligne de transmission et le premier organe de radio communication, ce second segment de ligne de transmission (7) ayant une longueur égale à la moitié de la longueur d'onde de transmission de la seconde fréquence dans ce segment, et en ce que la seconde branche (5) comporte un troisième segment de ligne de transmission (10) ayant une longueur égale au quart de la longueur d'onde de transmission de la première fréquence dans ce segment, et un quatrième segment de ligne de transmission (11) ayant une extrémité non raccordée et une extrémité opposée reliée à la seconde branche (5) entre le troisième segment de ligne de transmission et le second organe de radio communication, ce quatrième segment de ligne de transmission ayant une longueur égale au quart de la longueur d'onde de transmission de la première fréquence dans ce segment.

2. Dispositif de couplage selon la revendication 1 caractérisé en ce qu'il comporte une première capacité (8) montée en série entre le second segment de ligne de transmission (7) et la masse, et une seconde capacité (9) montée en parallèle au second élément de ligne de transmission.

3. Dispositif de couplage selon la revendication 1 ou la revendication 2 caractérisé en ce qu'il comporte une troisième capacité (12) montée en série entre le quatrième segment de ligne de transmission (11) et la seconde branche (5) et une impédance inductive (13) montée en parallèle au quatrième segment de ligne de transmission et reliée à la masse.

4. Dispositif de couplage selon la revendication 3 caractérisé en ce qu'il comporte un condensateur d'adaptation (14) en série avec l'impédance inductive (13).

European Patent Office

**EUROPEAN SEARCH REPORT**

Application Number

EP 91 40 1757

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 815 137 (KAEGEBEIN)(04-06-1974)<br>----- | 1-4 | H 04 B 1/50 |

TECHNICAL FIELDS
SEARCHED (Int. Cl.5)

H 04 B
H 01 P

The present search report has been drawn up for all claims

| Place of search | Date of completion of the search | Examiner |
|---|---|---|
| THE HAGUE | 19-08-1991 | ANDERSEN J.G. |

EPO FORM 1503 03.82 (P0401)